(19) **Europäisches Patentamt / European Patent Office / Office européen des brevets**

(11) **EP 2 244 080 A1**

(12) **EUROPÄISCHE PATENTANMELDUNG**

(43) Veröffentlichungstag:
**27.10.2010 Patentblatt 2010/43**

(51) Int Cl.:
***G01M 13/04*** (2006.01)

(21) Anmeldenummer: **09158627.1**

(22) Anmeldetag: **23.04.2009**

(84) Benannte Vertragsstaaten:
**AT BE BG CH CY CZ DE DK EE ES FI FR GB GR HR HU IE IS IT LI LT LU LV MC MK MT NL NO PL PT RO SE SI SK TR**

(71) Anmelder: **Baumüller Reparaturwerk GmbH & Co. KG**
**90411 Nürnberg (DE)**

(72) Erfinder: **Villwock, Sebastian**
**90427, Nürnberg (DE)**

(74) Vertreter: **Götz, Georg Alois**
**Intellectual Property IP-GÖTZ**
**Patent- und Rechtsanwälte**
**Am Literaturhaus, Königstrasse 70**
**90402 Nürnberg (DE)**

(54) **Verfahren zur Zustandsüberwachung bei Lagern permanenterregter Synchronmaschinen sowie zugehörige Einrichtung zur Zustandsüberwachung**

(57) Verfahren zur Zustandsüberwachung bei im Rahmen eines mechanischen Antriebsverbunds bestimmte Funktionen erfüllenden Lagern (5, 6) permanent erregter Synchronmaschinen (3, 4), wobei die Zustandsüberwachung antriebsbasiert mittels wenigstens einer Frequenzganganalyse durchgeführt wird.

Fig. 1

EP 2 244 080 A1

## EP 2 244 080 A1

## Beschreibung

Die Erfindung betrifft ein Verfahren zur Zustandsüberwachung bei im Rahmen eines mechanischen Antriebsverbunds bestimmte Funktionen erfüllenden Lagern permanenterregter Synchronmaschinen sowie eine zugehörige Einrichtung zur Zustandsüberwachung für im Rahmen eines mechanischen Antriebsverbunds bestimmte Funktionen erfüllende Lager permanenterregter Synchronmaschinen.

Innerhalb eines mechanischen Antriebsverbunds gibt es in aller Regel eine Mehrzahl von Lagern, die, beispielsweise aufgrund von Verschleißerscheinungen, fehlerhaft sein können bzw. Schäden aufweisen. In der Tat ist die häufigste Ursache für den Ausfall von elektrischen Maschinen in Produktionsanlagen ein Defekt in einem Maschinenlager. Andere Schäden sind gegenüber dem Problem der Lager von sekundärer Bedeutung.

Daher wurden im Stand der Technik bereits verschiedene Verfahren entwickelt, mit denen eine Diagnostik von Lagerschäden möglich ist und die auf Messungen unterschiedlicher physikalischer Größen basieren.

Beispielsweise gibt es vibrationsbasierte Verfahren, bei denen Lagerfehler anhand der gemessenen Maschinenvibration detektiert werden. Diese Verfahren weisen eine gute Genauigkeit auf und sind geeignet, Fehler frühzeitig zu erkennen. Die Schwingungen können durch Vibrationssensoren, z. B. am Lagergehäuse, aufgezeichnet werden. Insbesondere eignen sich der Schwingweg, die Schwinggeschwindigkeit oder die Schwingbeschleunigung als Messgrößen. Beispielhaft zu nennen für die Vibrationsanalyse sind die Darstellungen in verschiedenen Forschungsarbeiten von J. R. Stack, R. G. Harley und T. G. Habetler. Der Einsatz von Beschleunigungssensoren zur Vibrationsdetektion ist allerdings sehr kostspielig, wie von M. Blödt in der Doktorarbeit "Condition monitoring of mechanical faults in variable speed induction motor drives. Application of stator current time-frequency analysis and parameter estimation" dargestellt (Institut National de Polytechnique de Toulouse, France, 2006). Diese Art der Fehlerdiagnose ist daher vorrangig nur für den Einsatz in sicherheitsrelevanten Anlagen geeignet, so dass im Hinblick auf die Wirtschaftlichkeit nach alternativen Strategien gesucht werden muss, bei denen eine weniger aufwendige Sensorik erforderlich ist.

Desweiteren gibt es die Diagnose durch Messung von Körperschall, die darauf basiert, dass mechanische Fehler außer Vibrationen auch eine erhöhte Geräuschemission verursachen (vgl. hierzu beispielsweise R. Wirth, "Maschinendiagnose an Industriegetrieben", Grundlagen Antriebstechnik 37, Nr. 10, 1998). Ein spezifisches Verfahren zur Diagnose von Lagerschäden auf der Basis von Körperschall wird von K. Reitz, C. Steinhusen, J. H. D. Guimaraes und M. Makarski beschrieben (vgl. "Messung der Übertragungsfunktion zur Optimierung der Wälzlagerdiagnose", Tagungsband, 4. Aachener Kolloquium für Instandhaltung, Diagnose und Anlagenüberwachung, Band 46, Seiten 591-606, 6./7. November 2002). Für die dabei notwendige parallele Messwerterfassung ist allerdings ein hoher messtechnischer Aufwand erforderlich. Es müssen N Körperschallsignale mit N Sensoren aufgenommen werden.

Weiterhin existiert eine Diagnosetechnik zur Erkennung von Motorfehlern durch Messung der Maschinenströme, kurz als "MCSA" für "Motor current signatur analysis" bezeichnet. Der Vorteil der MCSA gegenüber der Vibrationsanalyse besteht darin, dass keine kostspieligen Sensoren erforderlich sind (vergleiche hierzu beispielsweise J. R. Stack, T. G. Habetler, R. G. Harley, "Bearing fault detection via autoregressive stator current modeling", IEEE Transactions on Industry Applications, Vol. 40, No. 3, May/June 2004). Die Anwendung der MCSA bei der Diagnose von Lagerfehlern ist allerdings insofern problematisch, als dass die Fehlersignale nur vergleichsweise kleine Amplituden besitzen und deren Erkennung im Stromspektrum daher schwierig ist. Weiterhin beschränken sich die bekannten Veröffentlichungen zur MCSA auf Motorlager von Asynchronmaschinen, die in einem mittleren Leistungsbereich eine sehr kleine Luftspaltbreite (zwischen Stator und Rotor) von nur einigen Zehntel Millimetern aufweisen (vgl. beispielsweise R. Fischer in "Elektrische Maschinen", Hanser-Verlag, 12. Auflage, 2004), wodurch die Diagnose basierend auf der Änderung der magnetischen Flussdichte im Luftspalt der Maschine im Vergleich zu Synchronmaschinen entscheidend begünstigt wird

Ein weiteres Verfahren stellt die Lagerüberwachung durch Temperaturmessung dar, die davon ausgeht, dass bei einer Erhöhung der Reibung im Lager die Temperatur gegenüber der normalen Betriebstemperatur ansteigt (vgl. hierzu J. Brändlein, P. Eschmann, L. Hasbargen, K. Weigand, "Die Wälzlagerpraxis - Handbuch für die Berechnung und Gestaltung von Lagerungen", Vereinigte Fachverlage, 3. Auflage, 1995). Singuläre Beschädigungen, die beispielsweise infolge von Materialermüdung in Erscheinung treten, sind so allerdings nicht erkennbar. Außerdem ist die Verwendung empfindlicher Messaufnehmer, beispielsweise von Thermoelementen oder Thermistoren, erforderlich (vgl. O. V. Thorsen, M. Dalva, "Methods of condition monitoring and fault diagnosis for induction motors", ETEP, Vol. 8, No. 5, Sept./Oct. 1998).

Schließlich ist die Lagerüberwachung durch Ölpartikelanalyse zu nennen, bei der eine Analyse des Schmiermittels durchgeführt wird. Ein in den Ölkreislauf integrierter Sensor misst die Menge der Verschleißpartikel im Schmierstoff. Dieses Verfahren wird allerdings nur bei besonders kritischen Anwendungen bzw. in Sonderfällen verwendet (vgl. das bereits genannte Handbuch "Die Wälzlagerpraxis" sowie den Artikel von Thorsen und Dalva).

Der Erfindung liegt damit die Aufgabe zugrunde, ein diesbezüglich verbessertes Verfahren zur Zustandsüberwachung bei ihm Rahmen eines mechanischen Antriebsverbunds bestimmte Funktionen erfüllenden Lagern permanenterregter Synchronmaschinen anzugeben.

Zur Lösung dieser Aufgabe ist erfindungsgemäß ein solches Verfahren vorgesehen, dass sich dadurch auszeichnet, dass die Zustandsüberwachung antriebsbasiert mittels wenigstens einer Frequenzganganalyse durchgeführt wird.

Im erfindungsgemäßen Kontext ist dabei der Begriff "Zustandsüberwachung" in einem sehr breiten Sinne zu verstehen. Das Verfahren erfasst neben dem "Condition monitoring" im eigentlichen Sinne selbstverständlich ebenso die übliche Fehlerdetektion und Diagnose mit den einzelnen im Rahmen der Diagnose durchzuführenden Schritten wie der Signalaufnahme, Auswertung und dergleichen. Das Verfahren bezieht sich auf permanenterregte Synchronmaschinen, bei denen Permanentmagnete zur Felderzeugung dienen.

Die vorliegende Erfindung stellt einen Beitrag zur Entwicklung zustandsorientierter Instandhaltung von Anlagen mit Antriebsverbünden dar, also von Anlagen, die mit elektrischer Antriebstechnik ausgerüstet sind. Die Zustandsüberwachung betrifft Lager, die im Kontext des mechanischen Antriebsverbunds bestimmte Funktionen aufweisen. Diese Lager sind somit im Hinblick auf bestimmte Aufgaben in den mechanischen Antriebsverbund integriert. Die erfindungsgemäße Zustandsüberwachung findet antriebsbasiert statt, also bezogen auf die einzelnen Antriebe des Verbunds bzw. ausgehend von Regel- bzw. Steuereinheiten für die jeweiligen Antriebe. Zur Zustandsüberwachung wird eine Frequenzganganalyse durchgeführt. Selbstverständlich liegt es ebenso im Rahmen der Erfindung, zur Zustandsüberwachung mehrfach Frequenzganganalysen durchzuführen, zum Beispiel mit unterschiedlichen Eingangsdaten bzw. kontinuierlich oder in bestimmten Zeitabschnitten, um so durch eine fortlaufende Überwachung zuverlässig Lagerfehler auffinden zu können. Frequenzganganalysen können auch gezielt bei Änderungen im System oder Anzeichen für Fehler vorgenommen bzw. wiederholt werden. Die erfindungsgemäße Zustandsüberwachung basiert somit auf der Aufnahme und Auswertung von Daten einer oder mehrerer Frequenzganganalysen.

Mit einer Frequenzganganalyse lässt sich eine Zustandsüberwachung mit besonderem Vorteil problemlos auch bei Synchronmaschinen durchführen, bei denen der Luftspalt im Vergleich zu Asynchronmaschinen deutlich größer ist. Das Prinzip einer Frequenzgangmessung zur Diagnose von Lagerschäden wurde zwar bereits in der Dissertation von S. Villwock mit dem Titel "Identifikationsmethoden für die automatisierte Inbetriebnahme und Zustandsüberwachung elektrischer Antriebe", Universität Siegen, 2007, durchgeführt, die dort beschriebene Vorgehensweise betraf allerdings auf rein akademischer Ebene lediglich Lager, die zusätzlich in einen mechanischen Antriebsstrang installiert worden waren und im mechanischen Verband keinerlei Funktion besaßen. Des weiteren finden sich in diesem Dokument keinerlei Hinweise, die Zustandsüberwachung antriebsbasiert durchzuführen, also mit engem Bezug zu den Regelungs- bzw. Steuerungseinrichtungen für die einzelnen Antriebe. Der Bezug zum einzelnen Antrieb stellt aber eine grundlegende Weiterentwicklung für die praktische Nutzbarkeit der Frequenzanalyse dar.

Die erfindungsgemäße Zustandsüberwachung kann für Wälzlager, insbesondere für rotierende und/oder translatorische Wälzlager, und/oder für einen Antriebsverbund einer Maschinenbauanlage und/oder einer Druckmaschine, insbesondere einer Zeitungsdruckanlage, durchgeführt werden. Die Erfindung ermöglicht also beispielsweise die Überwachung der Wälzlager der Antriebsmaschinen bei Zeitungsdruckanlagen usw.

Die Zustandsüberwachung mittels Frequenzganganalyse kann anhand von und/oder ausschließlich mittels wenigstens einer in wenigstens einem Antriebsregelgerät des Antriebsverbunds standardmäßig verfügbaren Information durchführt werden, insbesondere mittels einer, gegebenenfalls aus zwei Phasenströmen berechneten, drehmomentbildenden Komponente eines Statorstroms und/oder mittels einer motorseitig gemessenen Rotorposition und/oder eines Motordrehzahlistwertssignals.

Das erfindungsgemäße Verfahren geht so (mit besonderem Vorteil ausschließlich) von Informationen aus, die in einem Antriebsregelgerät oder dergleichen ohnehin verfügbar sind. Hierzu zählen die drehmomentbildende Komponente des Statorstroms $i_q(t)$ und die motorseitig gemessene Rotorposition $\Phi_M(t)$ bzw. das daraus abgeleitete Motordrehzahlistwertsignal ($\Omega_M(t) = d\Phi_M/dt$ bzw. $n_M(t)$). Damit kann auf eine zusätzliche, unter Umständen kostspielige, aufwändige bzw. störanfällige Sensorik verzichtet werden.

Im Rahmen der erfindungsgemäßen Zustandsüberwachung kann der aktuelle Zustand von Lagern ermittelt werden und/oder die Zustandsüberwachung kann für A-Lager und/oder B-Lager von permanenterregten Synchronmaschinen durchgeführt werden. Erfindungsgemäß kann somit beispielsweise der aktuelle Lagerzustand überwacht werden, indem Messungen in bestimmten Zeitabständen oder kontinuierlich bzw. bei Anzeichen für Probleme durchgeführt werden. Die Messungen können sowohl für A-Lager (also für die Stumpf- bzw. Stummelseite) als auch für den B-Teil der Lager, also die Geberseite, durchgeführt werden. Insgesamt ist durch die erfindungsgemäße Zustandsüberwachung eine Vermeidung, zumindest jedoch eine signifikante Verringerung von ungeplanten Anlagenstillständen in Folge von Lagerschäden erreichbar. Somit ergibt sich als technischer Vorteil zum Beispiel eine Reduktion der sogenannten Life-Cycle-Costs bzw. eine Optimierung der Wartungskosten, da durch das Condition Monitoring eine optimierte Ausnutzung des Verschleißvorrats der Maschinenelemente möglich ist. Die Maschinenelemente werden also weder zu früh noch zu spät ausgetauscht bzw. erneuert.

Die Zustandsüberwachung kann mittels einer integriert in einem Antriebsregler und/oder digitalen Signalprozessor und/oder Umrichter implementierten Funktion durchgeführt werden. Die Zustandsüberwachung findet in einem solchen Fall in dem Sinne antriebsbasiert statt, dass die Methode zur Überwachung des Zustands der Lager als integrierte Condition-Monitoring-Funktion in den Umrichtern bzw. Antriebsreglern oder Signalprozessoren implementiert ist, die den jeweiligen Antrieben zugehörig bzw. zugeordnet sind. Damit ist eine praxisnahe Realisierung der Zustandsüberwachung möglich.

In die Zustandsüberwachung kann eine Überprüfung auf geringfügige und/oder aus einem realen Betrieb bekannte Lagerschäden integriert werden bzw. die Zustandsüberwachung kann eine solche Überprüfung umfassen. Dies bedeutet, dass die erfindungsgemäße Zustandsüberwachung nicht nur für schwer beschädigte bzw. künstlich beschädigte Lager möglich ist, sondern dass mit dem erfindungsgemäßen Verfahren zum Beispiel bereits eine Diagnose sich anbahnender Schäden ermöglicht wird. Reale, zum Teil nur leicht beschädigte Lager können so bei der Zustandsüberwachung im Hinblick auf mögliche Schäden oder sich anbahnende Schäden richtig eingeordnet werden.

Die Zustandsüberwachung kann unter Berücksichtigung der bzw. wenigstens einer Beziehung zwischen der Amplitude des Anregungssignals für die Frequenzganganalyse und der Ausprägung wenigstens eines auf den Lagerzustand hinweisenden Indikators und/oder unter Optimierung der Amplitude des Anregungssignals für die Frequenzganganalyse im Hinblick auf die Ausprägung wenigstens eines auf den Lagerzustand hinweisenden Indikators durchgeführt werden.

Dies bedeutet, dass beim erfindungsgemäßen Verfahren gezielt die Amplitude des Anregungssignals so gewählt wird, dass bestimmte, auf den Lagerzustand hinweisende Indikatoren wie besondere Abweichungen, Ausschläge oder dergleichen beispielsweise von einer Referenzkurve gut erkennbar und diagnostizierbar sind. Je ausgeprägter der Indikator beispielsweise in einem Bode-Diagramm erkennbar ist, bei dem ein Graph für den Betrag, also die Amplitudenverstärkung, und ein Graph für das Argument, die Phasenverschiebung, aufgetragen wird, desto zuverlässiger kann die Lagerschadendiagnostik durchgeführt werden.

Die Zustandsüberwachung kann mittels einer Messung in einem geschlossenen Drehzahlregelkreis und/oder unter Betrachtung des mechanischen Antriebsverbunds als Zweimassenschwinger durchgeführt werden. Im geschlossenen Drehzahlregelkreis können beispielsweise die Rotorposition der Antriebsmaschine und Zweiphasenströme, aus denen die drehmomentbildende Komponente des Statorstroms berechnet wird, gemessen werden. Der mechanische Verband kann im Drehzahlregelkreis als Zweimassenschwinger berücksichtigt sein. Auf diese Art und Weise können spezifische Prüfstandsbedingungen vorgegeben werden.

Das System des mechanischen Antriebsverbunds kann zur Frequenzganganalyse mittels eines Pseudo-Rausch-Binär-Signals (PRBS) angeregt werden und/oder im Rahmen der Frequenzganganalyse kann zur Verarbeitung der Messsignale die Welch-Methode verwendet werden.

Die Welch-Methode dient bei der Verarbeitung der Messsignale dazu, die Signalstärke im Hinblick auf die Frequenz abzuschätzen. Dabei steht eine Reduzierung des Rauschens im Vordergrund.

Bei der Frequenzganganalyse kann als auf den Lagerzustand hinweisender Indikator wenigstens eine für einen Lagerschaden charakteristische Frequenz und/oder Veränderung um den Bereich wenigstens einer charakteristischen Frequenz und/oder wenigstens eine Veränderung um den Bereich wenigstens einer Vielfachen einer charakteristischen Frequenz im Frequenzgang berücksichtigt werden und/oder es können im Rahmen einer Auswertung eines Frequenzgangs ein Referenzfrequenzgang und/oder Toleranzvorgaben verwendet werden und/oder es kann ein Algorithmus zur Erkennung von Abweichungen von einem Referenzfrequenzgang verwendet werden und/oder es kann im Rahmen der Frequenzganganalyse ein Amplituden- und/oder Phasengang betrachtet werden.

Erfindungsgemäß können somit zur Indikation, in welchem Zustand sich ein Lager befindet, beispielsweise charakteristische Fehlerfrequenzen herangezogen werden. Diese lassen sich berechnen. Beispielsweise gilt für die charakteristische Frequenz für eine Beschädigung des äußeren Laufrings eines Lagers

$$f_{AR} = \frac{\Omega_{AR}}{2\pi} = \frac{z}{2} \cdot \frac{\Omega_n}{2\pi} \cdot \left(1 - \frac{d_w}{d_k}\cos(\theta)\right),$$

wobei z die Anzahl der Wälzkörper des Lagers angibt,
$\Omega_n$ die mechanische Winkelgeschwindigkeit des Antriebs darstellt,
$d_w$ den Wälzkörperdurchmesser angibt,
$d_k$ für den Käfigdurchmesser steht und
$\theta$ den Andrückwinkel wiedergibt.

Für den Innenring gilt entsprechend die Beziehung

$$f_{IR} = \frac{\Omega_{IR}}{2\pi} = \frac{z}{2} \cdot \frac{\Omega_n}{2\pi} \cdot \left(1 + \frac{d_w}{d_k}\cos(\theta)\right)$$

Charakteristische Fehlerfrequenzen beispielsweise für Kugellager mit acht bis zwölf Kugeln lassen sich auch anhand von Näherungsformeln berechnen, ohne dass eine Kenntnis der vorgenannten Parameter erforderlich wäre. Die entsprechenden Näherungsformeln lauten für den Außenring

$$\tilde{f}_{AR} = 0,4 \cdot z \cdot \frac{\Omega_n}{2\pi}$$

und für den Innenring

$$\tilde{f}_{IR} = 0,6 \cdot z \cdot \frac{\Omega_n}{2\pi}$$

Beispielsweise gelten für die Kugellager des DS71-Motors der Firma Baumüller die folgenden Kenndaten

| Tabelle1: Kenndaten von Kugellager der DS71-Motoren | | |
|---|---|---|
| **Rillenkugellager** | **A-Seite (6205-2RSR-C3)** | **B-Seite (6203-2Z-C3)** |
| Käfigdurchmesser $d_k = (d + D)/2$ | 38,5 mm | 25 mm |
| Wälzkörperdurchmesser $d_w$ | 7,938 mm (5/16") | 6.747 mm (17/64") |
| Anzahl Wälzkörper z | 9 | 8 |
| Druckwinkel $\theta$ | 0° | 0° |
| $f_{AR}(\Omega_n)$ | $0,5787 \cdot \Omega_n$ | $0,4648 \cdot \Omega_n$ |
| $f_{IR}(\Omega_n)$ | $0,8537 \cdot \Omega_n$ | $0,8084 \cdot \Omega_n$ |
| $f_{AR}(n=200\ min^{-1})$ | **12,12 Hz** | **9,73 Hz**, $f_{AR} \approx 11$ Hz |
| $f_{IR}(n=200\ min^{-1})$ | 17,88 Hz | 16,93 Hz |

Veränderungen um den Bereich der charakteristischen Frequenz(en) und deren Vielfacher im Frequenzgang weisen auf eine Beschädigung der Wälzlager hin. Bei einer geschickten Wahl der anregenden Amplitude für die Frequenzgangmessung lassen sich diese Indikatoren optimal erkennen und damit optimal auswerten.

Mit einem entsprechenden Algorithmus, der beispielsweise von einem Referenzamplitudengang ausgeht, lassen sich gezielt Abweichungen im Amplitudengang erkennen. Ebenso kann ein geeigneter Algorithmus nach Abweichungen im Phasengang suchen. Dabei können gegebenenfalls Fehlertoleranzen, die noch akzeptabel sind, bzw. normal auftretende Abweichungen berücksichtigt werden.

Im Rahmen der Zustandsüberwachung kann wenigstens eine Frequenzganganalyse an einer mechanisch leerlaufenden Synchronmaschine, insbesondere in einem Prüffeld und/oder Reparaturwerk und/oder ohne Demontage der Synchronmaschine, und/oder an einer Synchronmaschine mit einem im Vergleich zu einer Asynchronmaschine großen Luftspalt durchgeführt werden.

Die Messung an einer leerlaufenden Maschine ermöglicht die Messung im Prüffeld, beispielsweise in einem Reparaturwerk, um zu untersuchen, ob ein Lagerschaden vorliegt, ohne dass eine Demontage der Maschine erforderlich wäre. Des Weiteren lässt sich die erfindungsgemäße Zustandsüberwachung bei Synchronmaschinen mit einem großen Luftspalt durchführen, ohne dass durch den Luftspalt Probleme bzw. Fehler bei der Diagnose auftreten würden. Dies stellt einen deutlichen Vorteil gegenüber einer Reihe bisher üblicher Diagnoseverfahren dar.

Darüber hinaus betrifft die Erfindung eine Einrichtung zur Zustandsüberwachung für ihm Rahmen eines mechanischen Antriebsverbunds bestimmte Funktionen erfüllende Lager permanenterregter Synchronmaschinen, insbesondere nach einem Verfahren wie im Vorstehenden geschildert, die sich dadurch auszeichnet, dass die Einrichtung zur antriebsbasierten Zustandsüberwachung mittels wenigstens einer Frequenzganganalyse ausgebildet ist. Die Einrichtung weist also Mittel auf, um bei einem Motor bzw. einer permanent erregten Synchronmaschine eine Anregung beispielsweise mit einem Pseudo-Rausch-Binär-Signal vorzunehmen und die Signale, die sich aus dieser Anregung ergeben, aufzunehmen und auszuwerten. Dabei kann die Auswertung beispielsweise so erfolgen, dass Bode-Diagramme der Amplituden- und Phasengänge aus den Messdaten erzeugt werden, die dann beispielsweise mittels einer Recheneinrichtung, auf der entsprechende Funktionen bzw. Algorithmen implementiert sind, hinsichtlich spezifisch auf Lagerschäden hinweisender Indikatoren untersucht werden.

Die Einrichtung zur Zustandsüberwachung kann zur Ermittlung und/oder Auswertung von in wenigstens einem Antriebsregelgerät des Antriebsverbunds standardmäßig verfügbaren Informationen, insbesondere zur Ermittlung und/ oder Auswertung einer, gegebenenfalls aus zwei Phasenströmen berechneten, drehmomentbildenden Komponente eines Statorstroms und/oder einer motorseitig gemessenen Rotorposition und/oder eines Motordrehzahlistwerts, und/ oder des aktuellen Zustands von Lagern ausgebildet sein. Vorteilhafterweise werden somit von der Einrichtung Informationen genutzt, die ohnehin in den Antriebsregelgeräten gesammelt werden bzw. in diesen bereits vorliegen. Insbesondere ist es möglich, dass die Einrichtung die Zustandsüberwachung lediglich auf Basis solcher bereits vorhandener Informationen durchführt, sodass keine zusätzlichen Sensoren erforderlich sind und keine weiteren spezifischen Messwerte aufgenommen und verarbeitet werden müssen, wodurch insgesamt Kosten und Aufwand niedrig gehalten werden können.

Die Einrichtung kann wenigstens eine integriert in einem Antriebsregler und/oder digitalen Signalprozessor und/oder Umrichter implementierte Funktion umfassen und/oder die Einrichtung kann zur Überprüfung auf geringfügige und/oder aus einem realen Betrieb bekannte Lagerschäden und/oder zur Berücksichtigung der Beziehung zwischen der Amplitude des Anregungssignals für die Frequenzganganalyse und der Ausprägung wenigstens eines auf den Lagerzustand hinweisenden Indikators und/oder zur Optimierung der Amplitude des Anregungssignals für die Frequenzganganalyse im Hinblick auf die Ausprägung wenigstens eines auf den Lagerzustand hinweisenden Indikators ausgebildet sein.

Vorzugsweise wird die erfindungsgemäße Zustandsüberwachung in antriebsbezogene Vorrichtungen wie beispielsweise die Umrichter implementiert, so dass keine zusätzliche Hardware erforderlich ist. Die Zustandsüberwachungseinrichtung ist also dann Bestandteil einer bzw. mehrerer Komponenten des Antriebsverbunds bzw. in ein Antriebssystem integriert. Die Einrichtung kann Auswerte- bzw. Rechenmittel aufweisen, um z.B. die Anregung im Rahmen der Frequenzganganalyse im Hinblick auf das Indikatorsignal zu optimieren. Zu diesem Zweck kann gegebenenfalls eine wiederholte Anregung des zu prüfenden Systems erfolgen, wobei das erhaltene Signal beispielsweise im Rahmen einer Regelung überprüft wird, um schließlich eine optimale Anregung zu finden, damit der Indikator für den Lagerzustand hinreichend bzw. besonders gut ausgebildet ist.

Die Einrichtung kann zur Zustandsüberwachung mittels einer Messung in einem geschlossen Drehzahlregelkreis und/oder unter Betrachtung des mechanischen Antriebsverbunds als Zweimassenschwinger und/oder zur Anregung des Systems des mechanischen Antriebsverbunds zur Frequenzganganalyse mittels eines Pseudo-Rausch-Binär-Signals und/oder im Rahmen der Frequenzganganalyse zur Verwendung der Welch-Methode zur Verarbeitung der Messsignale ausgebildet sein.

Weitere Vorteile, Merkmale und Einzelheiten der Erfindung ergeben sich anhand der folgenden Ausführungsbeispiele sowie aus den Zeichnungen. Dabei zeigen:

Fig. 1 einen Zweimassenprüfstand zur Zustandsüberwachung gemäß einem erfindungsgemäßen Verfahren,

Fig. 2 ein A- und B-Lager einer auf Beschädigungen zu prüfenden Antriebsmaschine,

Fig. 3 ein Blockschaltbild eines geschlossenen Drehzahlregelkreises mit mechanischem Verbund,

Fig. 4 einen Amplitudengang eines defektfreien Zweimassenschwingers und eines Zweimassenschwingers mit beschädigtem A-Lager der Antriebsmaschine,

Fig. 5 einen Phasengang eines defektfreien Zweimassenschwingers und eines Zweimassenschwingers mit beschädigtem A-Lager der Antriebsmaschine,

Fig. 6 einen Frequenzgang eines defektfreien Zweimassenschwingers und eines Zweimassenschwingers mit beschädigtem A-Lager der Antriebsmaschine,

Fig.7 einen Frequenzgang mit im Vergleich zur Fig. 6 halbierter Amplitude des Pseudo-Rausch-Binär-Signals,

Fig. 8 einen weiteren Frequenzgang,

Fig. 9 einen Frequenzgang eines defektfreien Zweimassenschwingers und eines Zweimassenschwingers mit beschädigtem B-Lager der Antriebsmaschine,

Fig. 10 einen Frequenzgang mit einem Toleranzband um eine Referenzkurve,

Fig. 11 eine Messkonfiguration für eine Messung an einer mechanisch leerlaufenden Maschine und

Fig. 12 Messergebnisse einer Messung an einer mechanisch leerlaufenden Maschine.

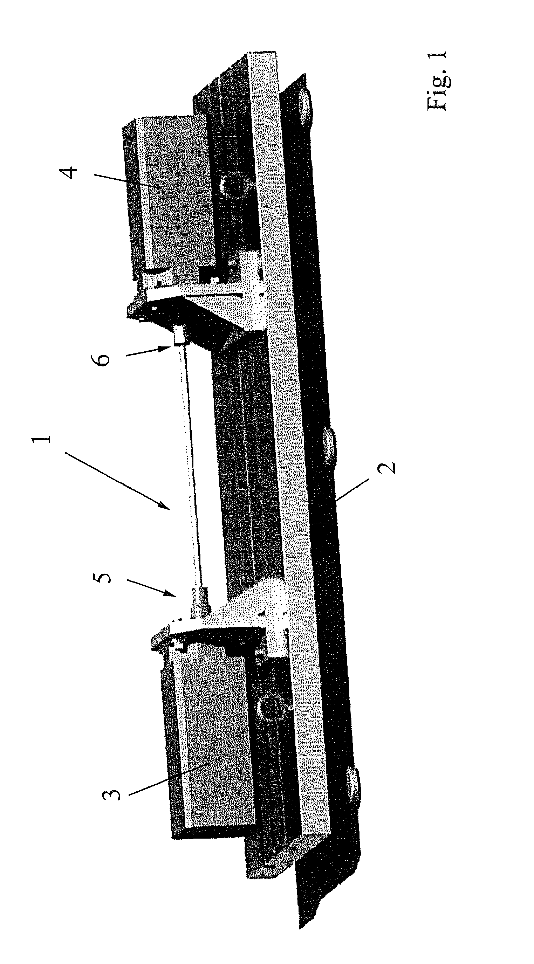

In der Fig. 1 ist ein Zweimassenprüfstand 1 zur Zustandsüberwachung von Lagern gezeigt. Der Zweimassenprüfstand 1 weist aufmontiert auf einen Träger 2 zwei Synchronmaschinen 3 und 4 auf. Die Lager 5 und 6 sind im Rahmen einer erfindungsgemäßen Zustandsüberwachung auf Schäden zu prüfen.

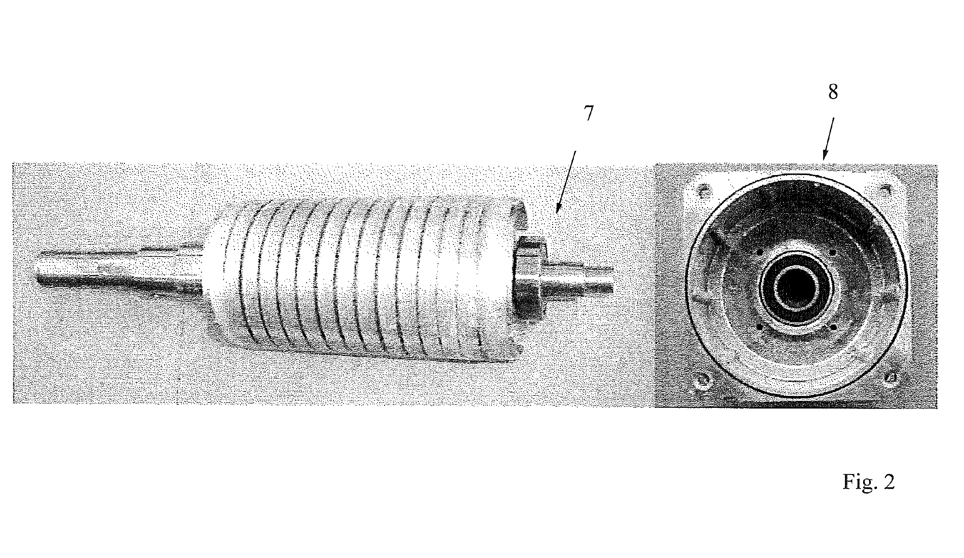

Die Fig. 2 zeigt das A-Lager 7 sowie das B-Lager 8 der untersuchten Synchronmaschinen 3 bzw. 4, wobei es sich im vorliegenden Fall um den Motor mit der Bezeichnung DS 71 der Firma Baumüller in Nürnberg handelt. Dabei wird mit dem A-Lager 7 der Stumpf bzw. Stummel (Geber) bezeichnet, während das B-Lager 8 die Aufnehmerseite darstellt.

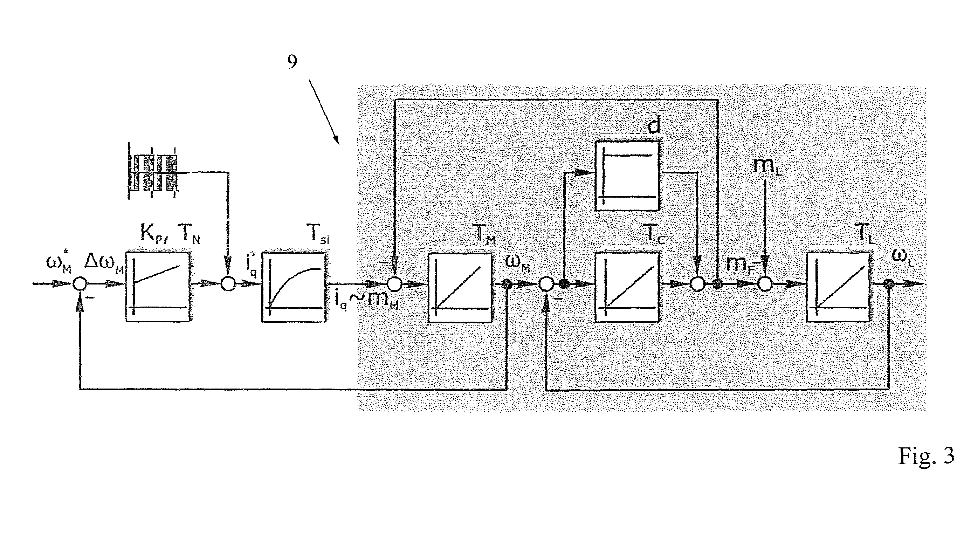

Die Lagerschadendiagnose erfolgt mittels einer Messung in einem geschlossenen Drehzahlregelkreis, der im Blockschaltbild 9 in der Fig. 3 gezeigt ist. Das Blockschaltbild 9 der Fig. 3 zeigt einen geschlossenen Drehzahlregelkreis mit mechanischem Verband, der als Zweimassenschwinger im Schaltbild berücksichtigt ist (vgl. Fig. 1). Den Eingang des geschlossenen Drehzahlregelkreises bildet ein vorgegebener Drehzahlsollwert bzw. eine Sollwinkelgeschwindigkeit $\omega_M{}^*$. Eine Abweichung vom Sollwert, $\Delta\omega_M$, geht als Regeldifferenz in die Reglerparametrierung ein (Proportionalverstärkung $K_P$), wobei $T_N$ den Reglerparameter bzw. die Nachstellzeit bezeichnet. Das Pseudo-Rausch-Binär-Signal wird additiv zum Ausgangssignal des Proportional-Integral-Drehzahlreglers (PI-Drehzahlreglers) eingekoppelt. Auf diese Art und Weise kann ein konstanter Drehzahlsollwert eingestellt werden. $i_q{}^*$ bezeichnet den Sollwert für die drehmomentbildende Komponente $(i_q)$ des Statorstroms. $T_{si}$ bezeichnet ein Verzögerungsglied mit dieser Zeitkonstanten. Die drehmomentbildende Komponente des Statorstroms $i_q$ ist proportional zum Antriebsmoment $m_M$, das auf das Nenndrehmoment $M_N$ bezogen ist. Eine weitere Zeitkomponente kommt durch die Hochlaufzeit des Motors $T_M$ ins Spiel. $\omega_M$ bezeichnet die Motorwinkelgeschwindigkeit bezogen auf die mechanische Nennwinkelgeschwindigkeit $\Omega_N$. Mit d ist eine normierte Materialdämpfung der Feder bezeichnet; d stellt somit einen Korrekturfaktor für das Parameterfitting dar. Die normierte Federkonstante ist mit $T_C$ bezeichnet, $T_L$ gibt die Hochlaufzeit der Last an. Das Federmoment ist $m_F$ bezeichnet, das Lastmoment mit $m_L$. Den Ausgang bildet hier die Lastwinkelgeschwindigkeit $\omega_L$ bezogen auf die mechanische Nennwinkelgeschwindigkeit, $\Omega_N$.

Um den Frequenzgang $G_{mech}(j\omega)$ des mechanischen Verbands zu messen, wird das System mit Hilfe eines Pseudo-Rausch-Binär-Signals angeregt. Zur Verarbeitung der Messsignale wird erfindungsgemäß vorzugsweise die Welch-Methode verwendet.

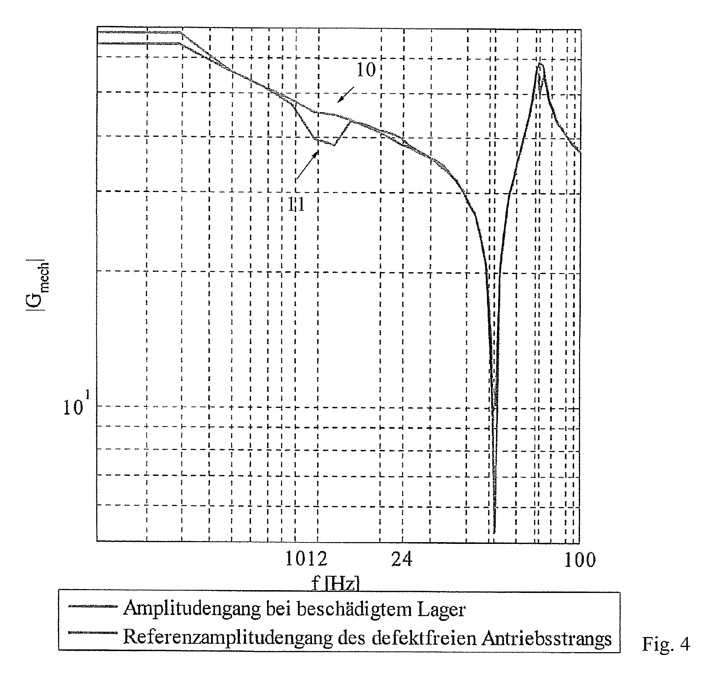

Die Fig. 4 zeigt einen Amplitudengang 10 eines defektfreien Zweimassenschwingers und einen Amplitudengang 11 eines Zweimassenschwingers mit beschädigtem A-Lager der Antriebsmaschine. Bei den Amplitudengängen 10, 11 ist jeweils der Betrag $|G_{mech}|$ gegenüber der Frequenz, f[Hz], aufgetragen. Der Sollwert der Motordrehzahl $n_N{}^*$ beträgt 200 min$^{-1}$, woraus sich für den äußeren Laufring des Lagers die charakteristische Frequenz $f_{AR}$ = 12 Hz ergibt. Die Eingangsgröße û beträgt 1A. Die Messung bezieht sich auf das A-Lager eines DS 71-Motors, wobei als defektes Lager ein Lager aus der Rückware eines Reparaturwerks verwendet wurde.

Der Amplitudengang 11 des beschädigten Lagers zeigt die erwartete Abweichung bei der charakteristischen Frequenz $f_{AR}$ = 12 Hz.

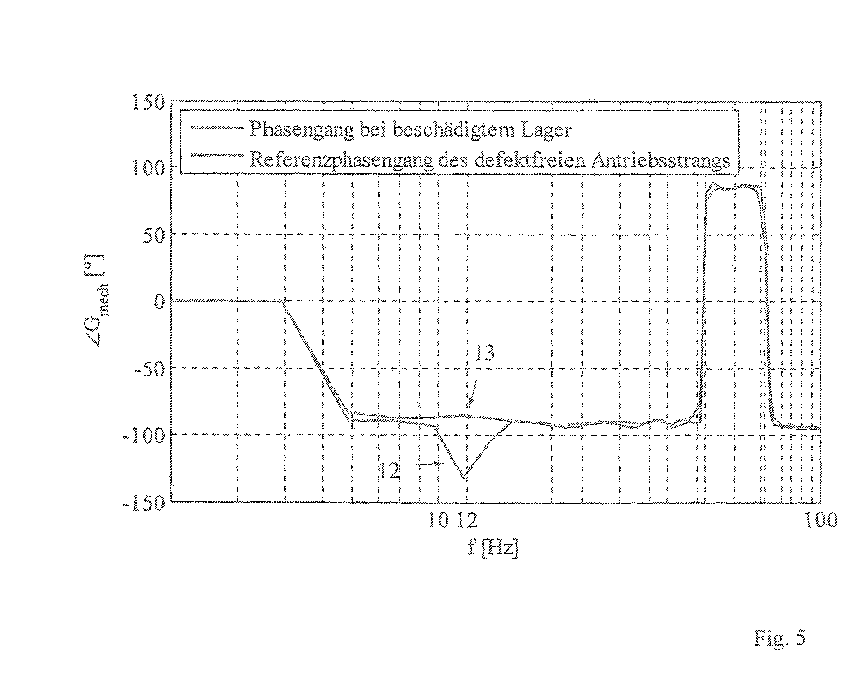

Die zugehörigen Phasengänge sind in der Fig. 5 gezeigt. Der Phasengang 12 ist der Phasengang bei beschädigtem Lager, der Phasengang 13 der Referenzphasengang des defektfreien Antriebsstrangs. Die Abweichung tritt im Phasengang der Übertragungsfunktion des mechanischen Systems $G_{mech}$ in erwarteter Weise im Bereich der charakteristischen Frequenz von 12 Hz auf.

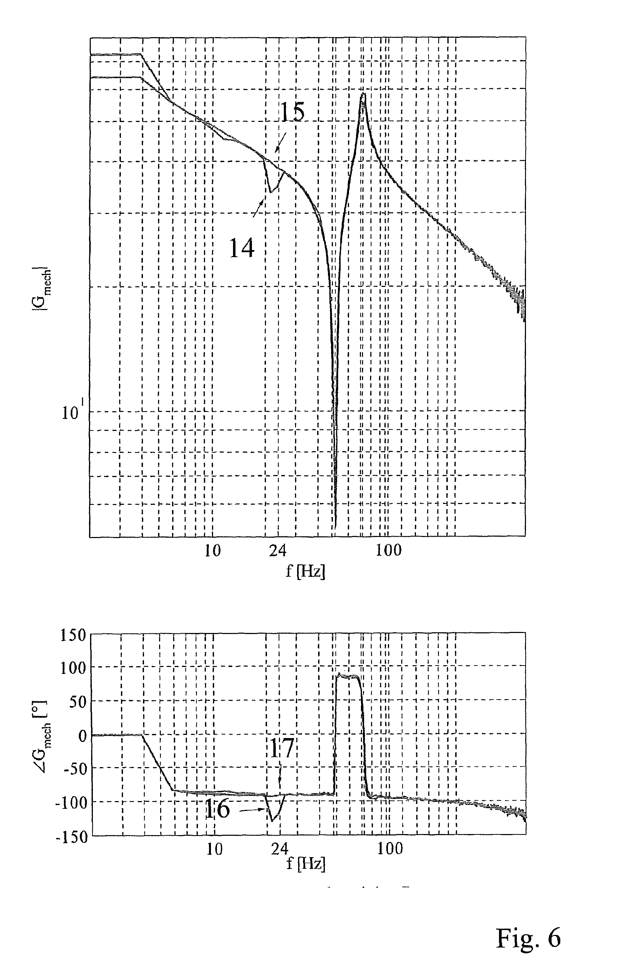

In der Fig. 6 ist ein Frequenzgang gezeigt, bei dem der Drehzahlsollwert im Vergleich zu den Fig. 4 und 5 auf $n_M{}^*$ = 400 min$^{-1}$ verdoppelt wurde. Gemäß den Gleichungen für die charakteristischen Frequenzen verschiebt sich der Indikator entsprechend von 12 Hz auf 24 Hz, so dass der Amplitudengang 14 des beschädigten A-Lagers im Vergleich zum Amplitudengang 15 des defektfreien Lagers, also zum Referenzamplitudengang, bei $f_{AR}$ = 24 Hz eine für den Lagerschaden charakteristische Abweichung aufweist. Gleiches gilt für den Phasengang 16 des beschädigten Zweimassenschwingers im Vergleich zum Phasengang 17 bei defektfreiem Zweimassenschwinger. Die Eingangsgröße û beträgt wiederum 1A.

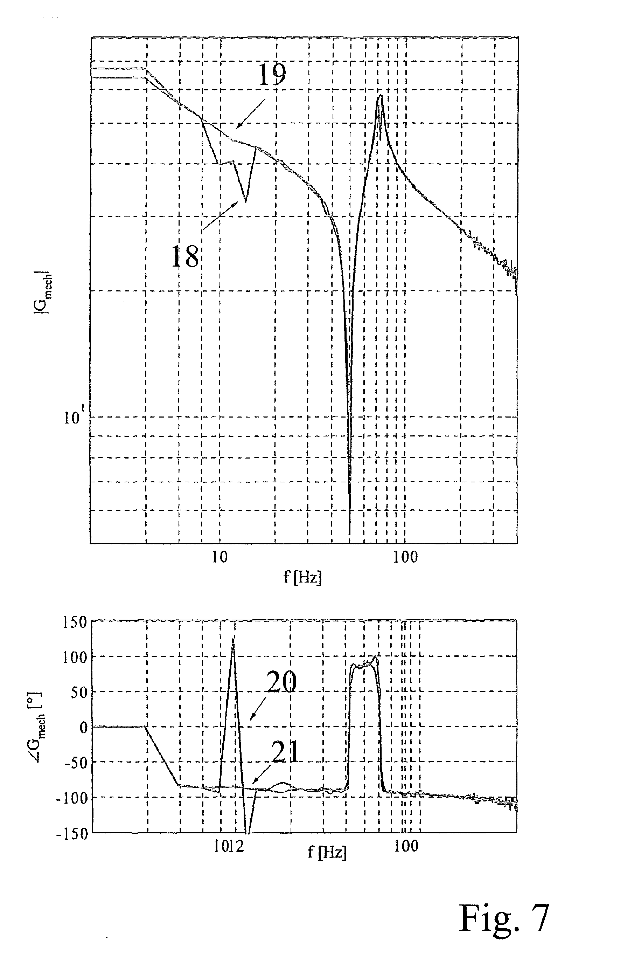

Für die Auswertung im Rahmen der Fehlerdiagnose wäre es wünschenswert, wenn die Ausprägung des Indikators noch deutlicher wäre. Um dies zu erreichen, wurde bei der Fig. 7 im Vergleich zu Fig. 6 eine halbierte Amplitude des Pseudo-Rausch-Binär-Signals zugrunde gelegt. Die Amplitude der Eingangsgröße bzw. des Signals wird also auf û = 0,5 A halbiert. Damit ergibt sich ein Amplitudengang 18 für den Fall des defekten A-Lagers und ein Amplitudengang 19 für den Fall des defektfreien Lagers, wobei hier die Ausprägung des Indikators beim Amplitudengang 18 für das Lager mit Defekt im Vergleich zu den vorhergehenden Figuren wesentlich deutlicher ist. So lässt sich durch eine gezielte Wahl der Amplitude des Pseudo-Rausch-Binär-Signals eine Optimierung der Messkurven dahingehend erreichen, dass Lagerschäden durch eine bessere Ausprägung der Abweichungen im Hinblick auf die jeweiligen Referenzkurven besser zu erkennen sind. Diese bessere Erkennbarkeit liegt ebenso beim Phasengang 20 des defekten Zweimassenschwingers im Vergleich zum Phasengang 21 des defektfreien Zweimassenschwingers vor, wie in der Fig. 7 unten gezeigt ist. Die Daten der Fig. 7 beziehen sich auf eine Motordrehzahl von $n_M^* = 200$ min$^{-1}$ und somit eine charakteristische Frequenz für Schäden am A-Lager von 12 Hz.

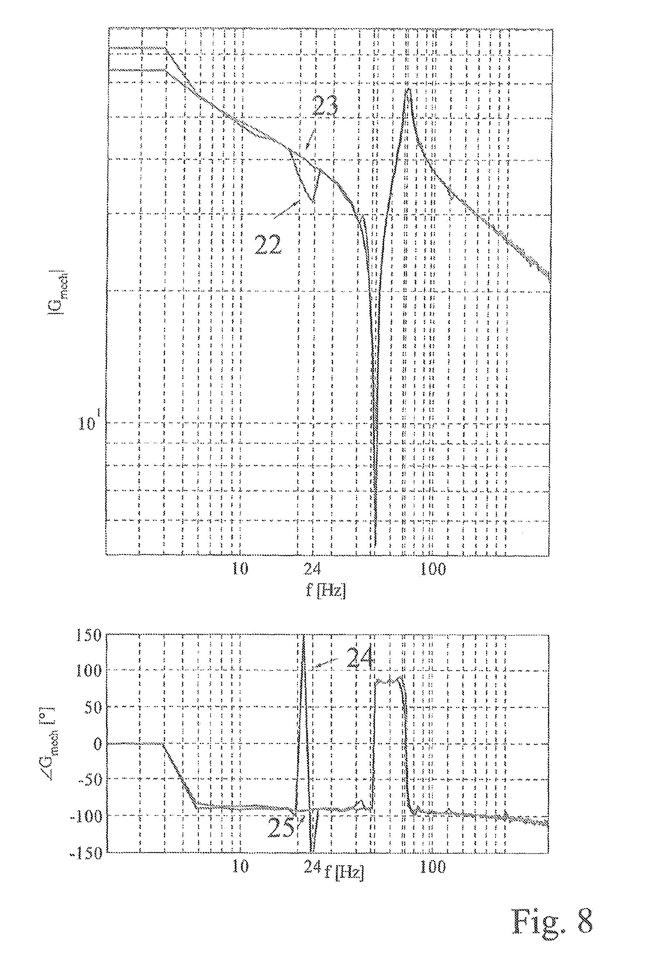

Die Fig. 8 zeigt einen weiteren Frequenzgang, wobei im Vergleich zur Fig. 7 die Motordrehzahl nun bei $n_M^* = 400$ min$^{-1}$ liegt. Daraus folgt eine charakteristische Frequenz bzw. Fehlerfrequenz von 24 Hz für Beschädigungen des A-Lagers. Wiederum ist bei dieser charakteristischen Frequenz eine Abweichung des Amplitudengangs 22 beim Vorliegen eines Defekts im Vergleich zum Amplitudengang 23 ohne Defekt zu erkennen. Entsprechendes gilt für den Phasengang 24 beim Fall eines beschädigten A-Lagers im Vergleich zum Phasengang 25 des unbeschädigten Lagers.

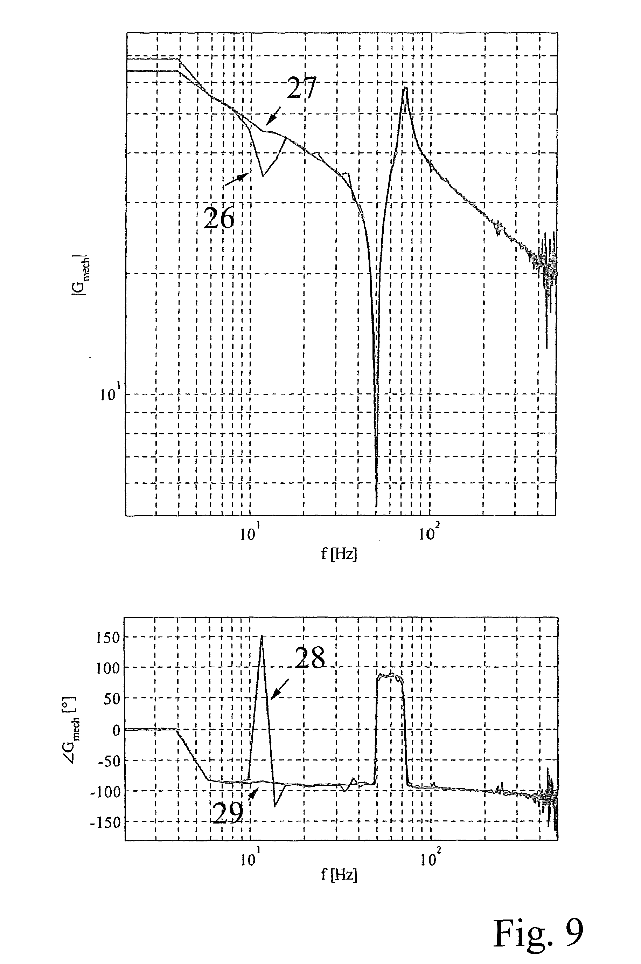

In der Fig. 9 ist der Frequenzgang eines defektfreien Zweimassenschwingers und eines Zweimassenschwingers mit beschädigtem B-Lager der Antriebsmaschine gezeigt. Die Motordrehzahl $n_N^*$ liegt bei 200 min$^{-1}$, woraus für den äußeren Laufring eine charakteristische Frequenz von $f_{AR} = 10$ Hz folgt. Auch hier ist im Fall des defekten B-Lagers beim Amplitudengang 26 bei der charakteristischen Frequenz von 10 Hz eine deutliche Abweichung im Vergleich zum Amplitudengang 27 für den Fall eines defektfreien Lagers zu erkennen. Gleiches gilt für den Phasengang 28 im Vergleich zum Phasengang 29, der bei einem nicht beschädigten B-Lager gemessen wird. Stets tritt bei den Frequenzgangsmessungen eine Abweichung zwischen dem aktuell gemessenen Frequenzgang des beschädigten Antriebsstrangs und einem Referenzfrequenzgang als Indikator auf. Die Ergebnisse sind gut reproduzierbar.

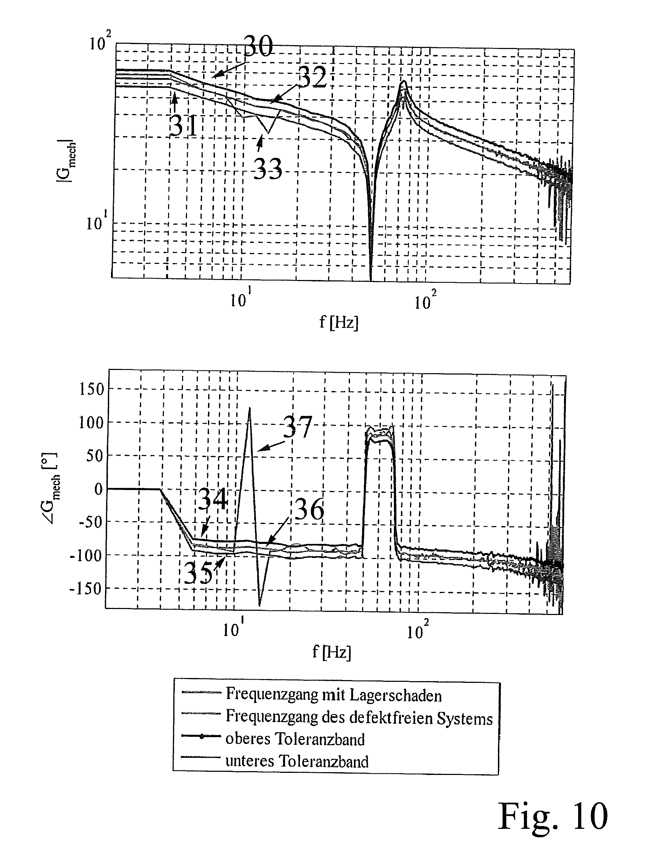

In der Fig. 10 ist ein Frequenzgang mit einem Toleranzband um eine Referenzkurve gezeigt. Durch Vorgabe von Toleranzwerten bzw. eines Toleranzbandes ist eine automatisierte Fehlererkennung möglich. In diesem Fall besteht der Indikator für das Auftreten eines Lagerschadens in der Überschreitung eines oberen Toleranzbands 30 beim Amplitudengang bzw. in der Unterschreitung eines unteren Toleranzbands 31 beim Amplitudengang. Die Toleranzbänder 30 und 31 schließen die Referenzkurve 32 ein. Im Fall des Vorliegens eines Lagerschadens ergibt sich ein gemessener Amplitudengang 33, bei dem der Toleranzbereich, der durch das obere Toleranzband 30 und das untere Toleranzband 31 vorgegeben wird, verlassen wird. Ein geeigneter Algorithmus sucht im Bereich insbesondere um die charakteristischen Fehlerfrequenzen nach einer solchen Abweichung sowohl im Amplituden- als auch im Phasengang. Dementsprechend werden, wie in der Fig. 10 unten gezeigt ist, auch für den Phasengang ein oberes Toleranzband 34 und ein unteres Toleranzband 35 definiert. Die beiden Toleranzbänder 34 und 35 umgeben den Phasengang des defektfreien Systems, der hier mit der Bezugsziffer 36 bezeichnet ist. Bei Vorliegen eines Lagerschadens ergibt sich ein Phasengang 37, bei dem hier der durch die Toleranzbänder 34 und 35 beschränkte Bereich deutlich verlassen wird.

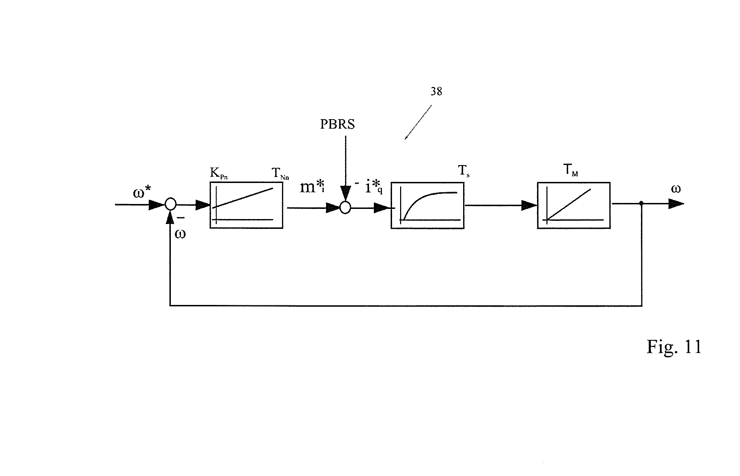

In der Fig. 11 ist eine Messkonfiguration 38 für eine Messung an einer mechanisch leerlaufenden Maschine gezeigt. Bei der Messkonfiguration 38 wird ein Sollwert $\omega^*$ für die Winkelgeschwindigkeit vorgegeben. $K_{Pn}$ bezeichnet die Proportionalverstärkung (Reglerparameter), $T_{Nn}$ die Nachstellzeit bzw. den entsprechenden Reglerparameter. Zur Messung des Phasengangs wird ein Pseudo-Rausch-Binär-Signal (PRBS) eingeleitet, wobei Ausgangspunkt der Messung Standardinformationen eines Antriebsregelgeräts sind. Insbesondere ist hier die drehmomentbildende Stromkomponente $i_q^*$ zu nennen. Der Momentsollwert ist in der Messkonfiguration 38 als $m_i^*$ dargestellt. $T_s$ bezeichnet eine Ersatzzeitkonstante des geschlossenen Regelkreises, $T_M$ wiederum die Hochlaufzeit des Motors. Ausgangssignal der Messkonfiguration ist die Motorwinkelgeschwindigkeit $\omega$. Für das Übertragungsverhalten gilt die folgende Übertragungs-funktion:

$$G_{mech}(s) = \frac{\omega_M(s)}{i_q(s)} = \frac{1}{s \cdot J_M} \ ,$$

wobei s = jw die komplexe Kreisfrequenz darstellt, $\omega_M$ die Motorwinkelgeschwindigkeit angibt, $i_q$ für die drehmomentbildende Stromkomponente steht und $J_M$ das Trägheitsmoment des Motors darstellt.

Die Phase liegt am Anfang bei 0° und geht dann auf -90°, da in einem realen System kein idealer Integrator gegeben ist, sondern sich das System bzw. die Maschine im Bereich sehr niedriger Frequenzen wie ein VZ1-Glied verhält, also wie ein Verzögerungsglied erster Ordnung.

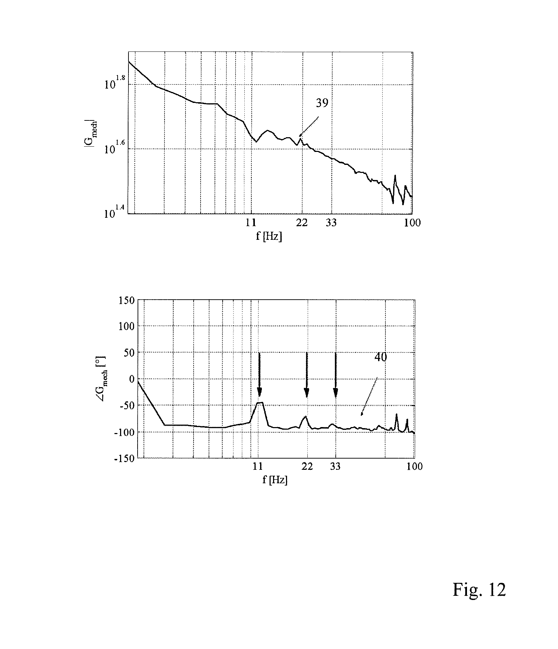

Die Fig. 12 zeigt schließlich Messergebnisse einer Messung an einer mechanisch leer laufenden Maschine, wobei einerseits der Amplitudengang 39, andererseits der Phasengang 40 dargestellt ist. Im Phasengang 40 sind drei Peaks zu sehen, die eine Abweichung vom erwarteten Verlauf darstellen und damit als Indikator auf einen Lagerschaden schließen lassen. Diese Peaks liegen an den erwarteten Stellen, nämlich bei Frequenzen um etwa 11 Hz und den Vielfachen davon, nämlich 22 und 33 Hz. Die Messung an einer leerlaufenden Maschine ermöglicht die Messung im Prüffeld bzw. Reparaturwerk, um so zu untersuchen, ob ein Lagerschaden vorliegt. Eine Demontage der Maschine ist nicht erforderlich.

**Bezugszeichenliste**

| | |
|---|---|
| 1 | Zweimassenprüfstand |
| 2 | Träger |
| 3 | Synchronmaschine |
| 4 | Synchronmaschine |
| 5 | Lager |
| 6 | Lager |
| 7 | A-Lager |
| 8 | B-Lager |
| 9 | Blockschaltbild |
| 10 | Amplitudengang |
| 11 | Amplitudengang |
| 12 | Phasengang |
| 13 | Phasengang |
| 14 | Amplitudengang |
| 15 | Amplitudengang |
| 16 | Phasengang |
| 17 | Phasengang |
| 18 | Amplitudengang |
| 19 | Amplitudengang |
| 20 | Phasengang |
| 21 | Phasengang |
| 22 | Amplitudengang |
| 23 | Amplitudengang |
| 24 | Phasengang |
| 25 | Phasengang |
| 26 | Amplitudengang |
| 27 | Amplitudengang |
| 28 | Phasengang |
| 29 | Phasengang |
| 30 | Oberes Toleranzband |
| 31 | Unteres Toleranzband |
| 32 | Referenzkurve |
| 33 | Amplitudengang |
| 34 | Oberes Toleranzband |
| 35 | Unteres Toleranzband |
| 36 | Phasengang |
| 37 | Phasengang |
| 38 | Messkonfiguration |
| 39 | Amplitudengang |
| 40 | Phasengang |
| $\omega_M^{*}$ | Drehzahlsollwert, Sollwinkelgeschwindigkeit Motor |

| | |
|---|---|
| $\Delta\omega_M$ | Abweichung Sollwert, Regeldifferenz |
| $K_P$ | Proportionalverstärkung |
| $T_N$ | Nachstellzeit |
| $i_q$ | drehmomentbildende Komponente Statorstrom |
| $i_q^*$ | Sollwert drehmomentbildende Komponente Statorstrom |
| $T_{si}$ | Verzögerungsglied mit Zeitkonstanter |
| $m_M$ | Antriebsmoment |
| $M_N$ | Nenndrehmoment |
| $T_M$ | Hochlaufzeit Motor |
| $\Omega_N$ | Nennwinkelgeschwindigkeit |
| $d$ | normierte Materialdämpfung Feder |
| $T_C$ | normierte Federkonstante |
| $T_L$ | Hochlaufzeit Last |
| $m_F$ | Federmoment |
| $m_L$ | Lastmoment |
| $\omega_L$ | Lastwinkelgeschwindigkeit |
| $G_{mech}(j\omega)$ | Frequenzgang |
| $n_N^*$ | Sollwert Motordrehzahl |
| $f_{AR}$ | charakteristische Frequenz äußerer Laufring |
| $\hat{u}$ | Eingangsgröße |
| $G_{mech}$ | Übertragungsfunktion des mechanischen Systems |
| $\omega^*$ | Sollwert Winkelgeschwindigkeit |
| $K_{Pn}$ | Proportionalverstärkung |
| $T_{Nn}$ | Nachstellzeit |
| PRBS | Pseudo-Rausch-Binär-Signal |
| $m_i^*$ | Momentsollwert |
| $T_s$ | Ersatzzeitkonstante |
| $J_M$ | Trägheitsmoment Motor |
| $s$ | komplexe Kreisfrequenz |
| $\omega$ | Motorwinkelgeschwindigkeit |

**Patentansprüche**

1. Verfahren zur Zustandsüberwachung bei im Rahmen eines mechanischen Antriebsverbunds bestimmte Funktionen erfüllenden Lagern (5, 6, 7, 8) permanenterregter Synchronmaschinen (3, 4), **dadurch gekennzeichnet, dass** die Zustandsüberwachung antriebsbasiert mittels wenigstens einer Frequenzganganalyse durchgeführt wird.

2. Verfahren nach Anspruch 1, **dadurch gekennzeichnet, dass** die Zustandsüberwachung für Wälzlager, insbesondere für rotierende und/oder translatorische Wälzlager, und/oder für einen Antriebsverbund einer Maschinenbauanlage und/oder einer Druckmaschine, insbesondere einer Zeitungsdruckanlage, durchgeführt wird.

3. Verfahren nach einem der vorangehenden Ansprüche, **dadurch gekennzeichnet, dass** die Zustandsüberwachung mittels Frequenzganganalyse anhand von und/oder ausschließlich mittels wenigstens einer in wenigstens einem Antriebsregelgerät des Antriebsverbunds standardmäßig verfügbaren Information durchgeführt wird, insbesondere mittels einer, gegebenenfalls aus zwei Phasenströmen berechneten, drehmomentbildenden Komponente ($i_q$) eines Statorstroms und/oder mittels einer motorseitig gemessenen Rotorposition und/oder eines Motordrehzahlistwertsignals ($\omega_M$).

4. Verfahren nach einem der vorangehenden Ansprüche, **dadurch gekennzeichnet, dass** im Rahmen der Zustandsüberwachung der aktuelle Zustand von Lagern (5, 6, 7, 8) ermittelt wird und/oder dass die Zustandsüberwachung für A-Lager (7) und/oder B-Lager (8) von permanenterregten Synchronmaschinen (3, 4) durchgeführt wird.

5. Verfahren nach einem der vorangehenden Ansprüche, **dadurch gekennzeichnet, dass** die Zustandsüberwachung mittels einer integriert in einem Antriebsregler und/oder digitalen Signalprozessor und/oder Umrichter implementierten Funktion durchgeführt wird.

6. Verfahren nach einem der vorangehenden Ansprüche, **dadurch gekennzeichnet, dass** in die Zustandsüberwachung eine Überprüfung auf geringfügige und/oder aus einem realen Betrieb bekannte Lagerschäden integriert wird.

7. Verfahren nach einem der vorangehenden Ansprüche, **dadurch gekennzeichnet, dass** die Zustandsüberwachung unter Berücksichtigung der Beziehung zwischen der Amplitude des Anregungssignals für die Frequenzganganalyse und der Ausprägung wenigstens eines auf den Lagerzustand hinweisenden Indikators und/oder unter Optimierung der Amplitude des Anregungssignals für die Frequenzganganalyse im Hinblick auf die Ausprägung wenigstens eines auf den Lagerzustand hinweisenden Indikators durchgeführt wird.

8. Verfahren nach einem der vorangehenden Ansprüche, **dadurch gekennzeichnet, dass** die Zustandsüberwachung mittels einer Messung in einem geschlossenen Drehzahlregelkreis und/oder unter Betrachtung des mechanischen Antriebsverbunds als Zweimassenschwinger durchgeführt wird.

9. Verfahren nach einem der vorangehenden Ansprüche, **dadurch gekennzeichnet, dass** das System des mechanischen Antriebsverbunds zur Frequenzganganalyse mittels eines Pseudo-Rausch-Binär-Signals (PRBS) angeregt wird und/oder dass im Rahmen der Frequenzganganalyse zur Verarbeitung der Messsignale die Welch-Methode verwendet wird.

10. Verfahren nach einem der vorangehenden Ansprüche, **dadurch gekennzeichnet, dass** bei der Frequenzganganalyse als auf den Lagerzustand hinweisender Indikator wenigstens eine für einen Lagerschaden charakteristische Frequenz ($f_{AR}$) und/oder Veränderung um den Bereich wenigstens einer charakteristischen Frequenz ($f_{AR}$) und/oder wenigstens einer ihrer Vielfachen im Frequenzgang berücksichtigt werden und/oder dass im Rahmen einer Auswertung eines Frequenzgangs ein Referenzfrequenzgang (32) und/oder Toleranzvorgaben (30, 31, 34, 35) verwendet werden und/oder dass ein Algorithmus zur Erkennung von Abweichungen von einem Referenzfrequenzgang verwendet wird und/oder dass im Rahmen der Frequenzganganalyse ein Amplituden- und/oder Phasengang (10 - 29, 33, 39, 40) betrachtet werden.

11. Verfahren nach einem der vorangehenden Ansprüche, **dadurch gekennzeichnet, dass** im Rahmen der Zustandsüberwachung wenigstens eine Frequenzganganalyse an einer mechanisch leerlaufenden Synchronmaschine (3, 4), insbesondere in einem Prüffeld und/oder Reparaturwerk und/oder ohne Demontage der Synchronmaschine, und/oder an einer Synchronmaschine (3, 4) mit einem im Vergleich zu einer Asynchronmaschine großen Luftspalt durchgeführt wird.

12. Einrichtung zur Zustandsüberwachung für im Rahmen eines mechanischen Antriebsverbunds bestimmte Funktionen erfüllende Lager (5, 6, 7, 8) permanenterregter Synchronmaschinen (3, 4), insbesondere zur Zustandsüberwachung nach einem Verfahren nach einem der vorangehenden Ansprüche, **dadurch gekennzeichnet, dass** die Einrichtung zur antriebsbasierten Zustandsüberwachung mittels wenigstens einer Frequenzganganalyse ausgebildet ist.

13. Einrichtung nach Anspruch 12, **dadurch gekennzeichnet, dass** die Einrichtung zur Ermittlung und/oder Auswertung von in wenigstens einem Antriebsregelgerät des Antriebsverbunds standardmäßig verfügbaren Informationen, insbesondere zur Ermittlung und/oder Auswertung einer, gegebenenfalls aus zwei Phasenströmen berechneten, drehmomentbildenden Komponente (iq) eines Statorstroms und/oder einer motorseitig gemessenen Rotorposition und/oder eines Motordrehzahlistwertsignals ($\omega_M$)., und/oder des aktuellen Zustands von Lagern (5, 6, 7, 8) ausgebildet ist.

14. Einrichtung nach einem der Ansprüche 12 oder 13, **dadurch gekennzeichnet, dass** die Einrichtung wenigstens eine integriert in einem Antriebsregler und/oder digitalen Signalprozessor und/oder Umrichter implementierte Funktion umfasst und/oder dass die Einrichtung zur Überprüfung auf geringfügige und/oder aus einem realen Betrieb bekannte Lagerschäden und/oder zur Berücksichtigung der Beziehung zwischen der Amplitude des Anregungssignals für die Frequenzganganalyse und der Ausprägung wenigstens eines auf den Lagerzustand hinweisenden Indikators und/oder zur Optimierung der Amplitude des Anregungssignals für die Frequenzganganalyse im Hinblick auf die Ausprägung wenigstens eines auf den Lagerzustand hinweisenden Indikators ausgebildet ist.

15. Einrichtung nach einem der Ansprüche 12 bis 14, **dadurch gekennzeichnet, dass** die Einrichtung zur Zustandsüberwachung mittels einer Messung in einem geschlossenen Drehzahlregelkreis und/oder unter Betrachtung des mechanischen Antriebsverbunds als Zweimassenschwinger und/oder zur Anregung des Systems des mechanischen Antriebsverbunds zur Frequenzganganalyse mittels eines Pseudo-Rausch-Binär-Signals (PRBS) und/oder im Rahmen der Frequenzganganalyse zur Verwendung der Welch-Methode zur Verarbeitung der Messsignale ausgebildet ist.

Fig. 1

EP 2 244 080 A1

Fig. 2

Fig. 3

Fig. 4

Fig. 5

Fig. 6

Fig. 7

18

Fig. 8

Fig. 9

Fig. 10

Fig. 11

Fig. 12

Europäisches
Patentamt

European
Patent Office

Office européen
des brevets

**EUROPÄISCHER RECHERCHENBERICHT**

Nummer der Anmeldung

EP 09 15 8627

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | VILLWOCK, SEBASTIAN: "Identifikationsmethoden für die automatisierte Inbetriebnahme und Zustandsüberwachung elektrischer Antriebe" [Online] 2007, UNIVERSITÄTSBIBLIOTHEK SIEGEN , XP002542553 Gefunden im Internet: URL:http://dokumentix.ub.uni-siegen.de/opus/volltexte/2007/290> [gefunden am 2009-08-12] Dissertation * das ganze Dokument * ----- | 1-15 | INV. G01M13/04 |
| X | DE 10 2004 050897 A1 (SIEMENS AG [DE]) 11. Mai 2006 (2006-05-11) | 1,12 | |
| A | * Absätze [0022] - [0033]; Abbildungen 2-4 * ----- | 5,14 | |
| X | US 6 053 047 A (DISTER CARL J [US] ET AL) 25. April 2000 (2000-04-25) * Spalte 5, Zeile 12 - Spalte 9, Zeile 65; Abbildungen 1-7 * ----- | 1,12 | RECHERCHIERTE SACHGEBIETE (IPC) G01M |

Der vorliegende Recherchenbericht wurde für alle Patentansprüche erstellt

| Recherchenort | Abschlußdatum der Recherche | Prüfer |
|---|---|---|
| Berlin | 24. August 2009 | Prasse, Torsten |

KATEGORIE DER GENANNTEN DOKUMENTE

X : von besonderer Bedeutung allein betrachtet
Y : von besonderer Bedeutung in Verbindung mit einer
   anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
   nach dem Anmeldedatum veröffentlicht worden ist
D : in der Anmeldung angeführtes Dokument
L : aus anderen Gründen angeführtes Dokument
   .................................................................
& : Mitglied der gleichen Patentfamilie, übereinstimmendes
   Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 09 15 8627

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

24-08-2009

| Im Recherchenbericht angeführtes Patentdokument | Datum der Veröffentlichung | Mitglied(er) der Patentfamilie | Datum der Veröffentlichung |
|---|---|---|---|
| DE 102004050897 A1 | 11-05-2006 | CN 101080623 A<br>DE 112005002540 A5<br>WO 2006042844 A1<br>JP 2008517260 T<br>US 2008083280 A1 | 28-11-2007<br>04-10-2007<br>27-04-2006<br>22-05-2008<br>10-04-2008 |
| US 6053047 A | 25-04-2000 | KEINE | |

EPO FORM P0461

Für nähere Einzelheiten zu diesem Anhang : siehe Amtsblatt des Europäischen Patentamts, Nr.12/82

# EP 2 244 080 A1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **R. Wirth.** Maschinendiagnose an Industriegetrieben. *Grundlagen Antriebstechnik,* 1998, vol. 37 (10
- Messung der Übertragungsfunktion zur Optimierung der Wälzlagerdiagnose. *Tagungsband, 4. Aachener Kolloquium für Instandhaltung, Diagnose und Anlagenüberwachung,* 06. November 2002, vol. 46, 591-606
- **J. R. Stack ; T. G. Habetler ; R. G. Harley.** Bearing fault detection via autoregressive stator current modeling. *IEEE Transactions on Industry Applications,* Mai 2004, vol. 40 (3
- **R. Fischer.** Elektrische Maschinen. Hanser-Verlag, 2004
- **J. Brändlein ; P. Eschmann ; L. Hasbargen ; K. Weigand.** Die Wälzlagerpraxis - Handbuch für die Berechnung und Gestaltung von Lagerungen. Vereinigte Fachverlage, 1995
- **O. V. Thorsen ; M. Dalva.** Methods of condition monitoring and fault diagnosis for induction motors. *ETEP,* September 1998, vol. 8 (5